# EUROPÄISCHE PATENTSCHRIFT

(11) **EP 1 903 063 B1**
(45) Veröffentlichungstag und Bekanntmachung des Hinweises auf die Patenterteilung: **12.08.2015**
(21) Anmeldenummer: 07116588.0
(22) Anmeldetag: 17.09.2007
(51) Int. Cl.: C08F 36/18, C08F 2/22, C09J 111/02

(54) **Verfahren zur Herstellung von Polychloropren-Latices**
Method for manufacturing polychloropren latices
Procédé pour la production de latices de polychloroprène

(30) Priorität: 25.09.2006 DE 102006045128
(43) Veröffentlichungstag der Anmeldung: 26.03.2008
(73) Patentinhaber: LANXESS Deutschland GmbH, 50569 Köln (DE)
(72) Erfinder: Reif, Lothar, 41541, Dormagen (DE); Lente, Christian, 41569, Rommerskirchen (DE)

(56) Entgegenhaltungen:
- GB-A- 1 545 104
- US-A- 3 887 539

## Beschreibung

Die vorliegende Erfindung betrifft ein neues Verfahren zur Herstellung von Latices aus Homo- oder Copolymeren des Chloroprens und gegebenenfalls eines oder mehreren weiteren copolymerisierbaren Monomeren sowie die erhaltenen, ebenfalls neuen Latices in gegebenenfalls aufkonzentrierter Form, deren Verwendung sowie die bei diesen Verwendungen erhaltenen Produkte.

Latices aus Polychloropren werden großtechnisch durch radikalische Emulsionspolymerisation von Chloropren (2-Chlor-1,3-butadien) hergestellt, gegebenenfalls durch Copolymerisation mit geeigneten Monomeren. Derartige Latices werden im Rahmen dieser Anmeldung auch zusammengefasst als "Polychloropren-Latices" bezeichnet. Bei der Herstellung werden in einem wässrigen Medium die Monomere mit einem Emulgatorsystem versetzt. Dieses ist in der Regel anionischer Natur, in seltenen Fällen kommen auch nichtionische oder kationische Systeme zum Einsatz. Der Temperaturbereich, in dem die Polymerisation durchgeführt wird, umfasst Werte von ca. 0°C bis über 60°C. Somit kann die Polymerisation durch thermisch zerfallende Radikalbildner initiiert werden oder durch Redox-Systeme. In der Regel kommen auch Molekulargewichtsregler wie Mercaptane oder Xanthogendisulfide zum Einsatz. In einigen Fällen wird das Molekulargewicht des Endprodukts auch durch Copolymerisation mit Schwefel und anschließende Spaltung der dabei entstehenden sulfidischen Bindungen eingestellt. Der erwünschte Umsatz wird durch Abstoppen der Reaktion mit einem geeigneten Agens eingestellt. In der weit überwiegenden Zahl der Fälle wird die so erhaltene Dispersion von Polychloropren in Wasser, der sogenannte Polychloropren-Latex, nachfolgend mittels Durchleiten von Wasserdampf entmonomerisiert. Ein Teil des dabei erhaltenen Produkts findet unmittelbar als Latex industrielle Verwendung, der größere Teil jedoch wird durch Koagulation - meist eine Gefrierkoagulation - von anhaftendem Wasser befreit und als festes Produkt seiner endgültigen Verwendung zugeführt.

Bei der Polymerisation entstehen in der Regel Nebenprodukte wie z.B. Dimere des Chloroprens oder andere niedermolekulare Verbindungen, die einen unerwünschten Einfluss auf den Geruch des fertigen Produktes haben können, sei es für seine Anwendung als Latex oder auch als Festkautschuk. Diese Nebenprodukte können nur in untergeordnetem Maße durch die oben geschilderte Wasserdampfbehandlung bei der Latexentgasung oder auch durch eine Waschwasserbehandlung bei der Aufarbeitung des Festkautschuks entfernt werden.

Eine Möglichkeit, die unerwünschten geruchsbildenden Nebenprodukte zumindest in gewissen Maße zu verringern, besteht darin, die Polymerisation bei einer erniedrigten Polymerisationstemperatur durchzuführen. Eine geringere Polymerisationstemperatur bedeutet jedoch unmittelbar eine verringerte Polymerisationsgeschwindigkeit und ist daher aus ökonomischen Gründen nicht anzustreben. Ferner ist bekannt, dass bei Polychloropren die Kristallisationsneigung der entstehenden Produkte oft dem verwendungsgemäßen Gebrauch entgegensteht.

Eine technologisch wichtige Eigenschaft synthetischer Latices ist der sog. "Gelgehalt", der den Anteil des Polymeren kennzeichnet, der in einem bestimmten Lösungsmittel (z.B. Toluol) unlöslich ist. Ein hoher Gelgehalt ist bei verschiedenen Anwendungen unabdingbar, z.B. wenn eine hohe Festigkeit eines "nassen", d.h. noch nicht vollständig getrockneten Films aus dem jeweiligen Material gefordert ist. Ein hoher Gelgehalt lässt sich bei Verwendung von Chloropren (wie bei allen durch Emulsionspolymerisation polymerisierten Dienen) durch Vernetzung mittels eines mehrfunktionellen Monomeren oder durch hohen Umsatz bei der Polymerisationsreaktion erreichen. Ein hoher Umsatz (z.B. > 95%) ist aber mit ökonomisch wenig erstrebenswerten langen Polymerisationszeiten verknüpft, insbesondere dann, wenn relativ niedrige Polymerisationstemperaturen verwendet werden.

Eine ökonomisch günstigere, weil schneller zu den erwünschten Umsätzen führende Polymerisation bei relativ hohen Temperaturen hat jedoch eine verstärkte Bildung von dimeren Nebenprodukten via Diels-Alder-Reaktionen zur Folge, und auch andere Nebenreaktionen sind zu beobachten. Hierdurch entstehen häufig Produkte, die für einige Anwendungen unbrauchbar sind bedingt durch die entstehende Geruchsbelästigung bei Herstellung oder Verwendung der Endprodukte.

In der Vergangenheit wurden verschiedene Methoden beschrieben, um die geruchsbildenden Nebenprodukte durch Zusatz von Duftstoffen mit intensiverem Geruch zu "maskieren". Beispiele für solche Maskierungsagentien sind "Heuduft", Anisaldehyd, Vanillin, Kampher. Diese Methode wird durch J.C. Carl in "Neoprene Latex", E.I. DuPont de Nemours (Monographie im Selbstverlag), 1962, Seite 67 beschrieben. In der WO-A-01/00683 wird ferner eine Methode beschrieben, die die Entfernung von Geruchsstoffen mittels Ozon oder Wasserstoffperoxid umfasst. All diesen Methoden ist gemeinsam, dass sie die entstehenden geruchsbildenden Stoffe überdecken oder entfernen, aber nicht deren Entstehung vermeiden oder minimieren.

GB1545104 beschreibt ein Verfahren zur Herstellung eines Latex aus Homopolymeren des Chloroprens durch Emulsionpolymerisation.

US3887539 beschreibt die Verwendung von Polychloropren-Latex zur Herstellung von Dispersionsklebstoffen.

Aufgabe der vorliegenden Erfindung war es daher, ein Verfahren zur Herstellung von Polychloropren-Latices zu finden, das mit hoher Reaktionsgeschwindigkeit abläuft, trotzdem gleichzeitig die Bildung geruchsbelästigender Nebenprodukte vermeidet und ferner zu Latices führt, deren technologische Eigenschaften denjenigen von Latices des Standes der Technik nicht nachstehen.

Überraschenderweise konnte diese Aufgabe dadurch gelöst werden, dass die Emulsionspolymerisation nicht wie im Stand der Technik bei einer konstant eingestellten Temperatur durchgeführt wird, sondern die Polymerisationstemperatur während des Polymerisationsverlaufs erhöht wird.

**Gegenstand der Erfindung** ist somit ein Verfahren zur Herstellung eines Latex aus Homo- oder Copolymeren des Chloroprens und gegebenenfalls eines oder mehreren weiteren copolymerisierbaren ungesättigten Monomeren durch Emulsionspolymerisation, welches dadurch gekennzeichnet ist, dass man ausgehend von einer Starttemperatur Tₛ während der Emulsionspolymerisation die Polymerisationstemperatur anhebt, und zwar
a) bis zu einem Umsatz von 50 % um mindestens 3°C über die Starttemperatur Tₛ und anschließend
b) bis zu einem Umsatz von 90 % um mindestens 6°C über die Starttemperatur Tₛ.

Das erfindungsgemäße Verfahren zeichnet sich dadurch aus, dass eine gegenüber dem Stand der Technik höhere Reaktionsgeschwindigkeit möglich ist. Neben diesem Vorteil, der die ökonomische Attraktivität des Verfahren substanziell steigert, ist ferner eine deutlich geringere Bildung von Nebenprodukten zu beobachten, als dies bei Verfahren des Standes der Technik der Fall ist, wenn die Polymerisation bei einer konstanten Reaktionstemperatur durchgeführt wird. Aufgrund der geringen Menge von Nebenkomponenten ist das Verfahren somit auch aus ökologischer Sicht vorteilhaft.

Bei dem erfindungsgemäßen Verfahren handelt es sich um eine Emulsionspolymerisation, die bei einem pH-Wert im Bereich von 9 bis 14, vorzugsweise im Bereich von 11 bis 13 durchgeführt wird. Die Einstellung des pH-Wertes erfolgt mit üblichen Zusätzen, bevorzugt sind KOH oder NaOH.

Die Initiierung der Polymerisation erfolgt durch dem Fachmann bekannte Initiatoren bzw. Initiatorsysteme. Als Beispiele für Initiatoren bzw. Initiatorsysteme seien genannt: Formamidinsulfinsäure, Kaliumperoxodisulfat, Redoxsysteme auf Basis von Kaliumperoxodisulfat und gegebenenfalls Silbersalz (Na-Salz der Anthrachinon-betasulfonsäure), wobei beispielsweise Verbindungen wie Formamidinsulfinsäure, das Na-Salz der Hydroximethansulfinsäure, Natriumsulfit und Natriumdithionit als Redoxpartner dienen. Auch Redoxsysteme auf Basis von Peroxiden und Hydroperoxiden sind geeignet. Die üblichen einzusetzenden Mengen des Initiators/Initiatorsystems kann der Fachmann aufgrund seines Fachwissens in Abhängigkeit von Faktoren wie z.B. der Größe des Reaktionsgefäßes bzw. des Kessels oder Reaktors leicht bestimmen.

Erfindungswesentlich ist, dass die Polymerisationstemperatur ausgehend von einer Starttemperatur Tₛ im Verlauf der Emulsionspolymerisationsreaktion angehoben wird.

Die Starttemperatur Tₛ und die Polymerisationstemperatur liegen üblicherweise in einem Bereich von 0°C bis 70°C, bevorzugt in einem Bereich von 10°C bis 60°C und besonders bevorzugt in einem Bereich von 35°C bis 50°C.

Von Bedeutung für das erfindungsgemäße Verfahren ist es, dass man ausgehend von einer Starttemperatur Tₛ die Polymerisationstemperatur
a) bis zu einem Umsatz von 50% um mindestens 3°C über die Starttemperatur Tₛ anhebt und anschließend
b) bis zu einem Umsatz von 90% um mindestens 6°C über die Starttemperatur Tₛ anhebt.

In einer bevorzugten Ausführungsform wird ausgehend von der Starttemperatur Tₛ die Polymerisationstemperatur
a) bis zu einem Umsatz von 50% um mindestens 5 °C über die Starttemperatur Tₛ und anschließend
b) bis zu einem Umsatz von 90% um mindestens 6°C, besonders bevorzugt um mindestens 8 °C über die Starttemperatur Tₛ angehoben.

### Dies bedeutet:

Wird bis zu einem Umsatz von 50% die Starttemperatur Tₛ um mindestens 3 °C gesteigert, so wird danach die Temperatur bis zum Umsatz von 90% nochmals um mindestens 3°C gesteigert.

Wird bis zu einem Umsatz von 50% die Starttemperatur Tₛ bevorzugt um mindestens 5°C gesteigert, so wird die dann erreichte Temperatur anschließend bis zum Umsatz von 90% nochmals um mindestens 1°C, bevorzugt um mindestens 3°C gesteigert.

Die Anhebung der Polymerisationstemperatur im erfindungsgemäßen Verfahren kann entweder stufenweise oder aber kontinuierlich erfolgen.

Bei dieser spezielle n Art der Temperaturführung im erfindungsgemäßen Verfahren wird üblicherweise gegenüber den bekannten, isotherm geführten Emulsionspolymerisationen zur Herstellung von Polychloropren-Latices mit einer niedrigeren Temperatur begonnen und diese dann sukzessive erhöht und am Ende des Reaktionsverlaufs bei einer gegenüber den Verfahren des Standes der Technik erhöhten Temperatur polymerisiert. Es hat sich bewährt, die Temperatursteigerungen im erfindungsgemäßen Verfahren so auszugestalten, dass die sich über die Polymerisationszeit ergebende mittlere Polymerisationstemperatur der isothermen Temperatur bei einer Reaktionsführung nach dem Stand der Technik nahe kommt oder entspricht.

Mit dem erfindungsgemäßen Verfahren gelingt die Herstellung von Latices auf der Basis von Polychloropren oder auf Basis von Copolymeren des Chloroprens und eines oder mehreren weiteren copolymerisierbaren ungesättigten Monomeren.

Für die Herstellung von Copolymeren sind solche copolymerisierbaren ungesättigten Monomere geeignet, wie sie in "Houben-Weyl: Methoden der Organischen Chemie", Band 20 Teil 3, Makromolekulare Stoffe, 1987, Seite 844 beschrieben sind. Bevorzugt sind Monomere mit 3 bis 12 C-Atomen und 1 oder 2 copolymerisierbaren C=C-Doppelbindungen pro Molekül. Beispiele für bevorzugte copolymerisierbare Monomere sind 2,3-Dichlorbutadien und 1-Chlorbutadien.

Das erfindungsgemäße Verfahren kann entweder diskontinuierlich, d.h. in einer batch Fahrweise, oder aber kontinuierlich durchgeführt werden. Bevorzugt ist die kontinuierliche Polymerisation. Die kontinuierliche Fahrweise kann beispielsweise auch durch Hintereinanderschaltung verschiedener Reaktionsgefäße oder Kessel mit ansteigender Polymerisationstemperatur realisiert werden.

Die prinzipielle Weise, in der die Emulsionspolymerisation durchgeführt wird, ist dem Fachmann bekannt. Üblicherweise wird die das Emulgatorsystem enthaltende wässrige Phase und das bzw. die Monomere in einem Reaktionsgefäß vorgelegt und anschließend mit einem Inertgas, vorzugsweise Stickstoff gespült. Anschließend wird das Reaktionssystem auf die gewünschte Starttemperatur der Polymerisation gebracht bzw. aufgeheizt und die Polymerisation durch Zugabe des Initiators oder Initiatorsystems gestartet. Die Zugabe des Initiators oder Initiatorsystems kann je nach Typ in einer oder mehreren Portionen erfolgen, oder aber auch kontinuierlich. Nach Erreichen des gewünschten Umsatzes wird die Polymerisation üblicherweise durch Zugabe eines geeigneten Agens abgestoppt. Als Stopper haben sich insbesondere Diethylhydroxylamin oder Phenothiazin bewährt.

Vorzugsweise werden nach der Polymerisation das restliche Chloropren sowie die weiteren, gegebenenfalls eingesetzten Monomere entfernt. Dies erfolgt beispielsweise durch eine Wasserdampfdestillation. Sie wird durchgeführt wie z.B. beschrieben in "Houben-Weyl: Methoden der organischen Chemie" Band 20, Teil 3 Makromolekulare Stoffe, (1987) Seite 842-859.

Die durch das erfindungsgemäße Verfahren erhaltenen wässrigen Dispersionen (die sogenannten "Latices") von Polychloropren-Homo- oder Copolymeren sind ebenfalls neu.

**Gegenstand der vorliegenden Erfindung** ist daher ferner eine wässrige Dispersion ("Lat ex") eines Homo- oder Copolymeren von Chloropren und gegebenenfalls einem oder mehreren weiteren copolymerisierbaren ungesättigten Monomeren, die nach dem erfindungsgemäßen Verfahren erhältlich ist, wobei dieses Homo - bzw. Copolymer in Toluol bei 23 °C einen Gelanteil von größer 60 Gew.%, bezogen auf das Homo- bzw. Copolymer, bevorzugt von größer 80 Gew.-%, besonders bevorzugt von größer 90 Gew.-% aufweist.

Der sogenannte Gelanteil ist eine dem Fachmann geläufige Größe. Es handelt sich dabei um den in Toluol bei 23°C unlöslichen Anteil des Polychloropren-Latex. Zur Bestimmung werden 250 mg des Polychloropren-Latex in 20 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstands und der Einwaage und wird in Gewichtsprozent angegeben.

Sofern im erfindungsgemäßen Verfahren ein Copolymer von Chloropren und einem oder mehreren weiteren copolymerisierbaren ungesättigten Monomeren hergestellt wird, weist dieses Copolymer bevorzugt einen Chloropren-Gehalt von mindestens 20 Gew.%, bevorzugt 50 Gew.% auf.

Die erfindungsgemäße wässrige Dispersion (Latex) zeichnet sich somit durch den genannten hohen Gelgehalt des Polymers sowie einen sehr geringen Anteil an unerwünschten Nebenkomponenten, insbesondere der Dimeren des Chloroprens, aus. Bei diesen Dimeren des Chloroprens handelt es sich um 6 strukturisomere Verbindungen. Die Latices besitzen daher nur einen sehr geringen Geruch und können ferner nach einem ökonomisch vorteilhaften Verfahren hergestellt werden.

Es ist möglich, mittels einer sensorische n Prüfung Geruchsvergleiche zwischen verschiedenen Substanzen bei gleichen, definierten Bedingungen durchzuführen. Weiterhin ist es im vorliegenden Fall des erfindungsgemäßen Polychloropren-Latex möglich, eine gaschromatographische Bestimmung des Gehalts de r Dimeren von Chloropren vorzu nehmen, wobei diese Dimeren als Leitsubstanz für den Geruch dienen.

Die erfindungsgemäßen Polychloropren-Latices können weiter aufkonzentriert werden. Üblicherweise werden hierzu die wässrigen Dispersionen der Homo- oder Copolymere von Chloropren und gegebenenfalls einem oder mehreren weiteren copolymerisierbaren ungesättigten Monomeren durch Koagulation aufkonzentriert. Derartige Methoden zur Koagulation sind dem Fachmann hinreichend bekannt. Bevorzugt handelt es sich um eine Gefrierkoagulation, durch die anhaftendes Wasser entfernt wird und ein aufkonzentrierter Latex in Form eines festen Produkts erhalten wird.

**Gegenstand der Erfindung** ist somit auch ein aufkonzentrierter Lat ex von Homo- oder Copolymere des Chloroprens und gegebenenfalls eines oder mehreren weiteren copolymerisierbaren ungesättigten Monomeren, der dadurch gekennzeichnet ist, dass das Homo- bzw. Copolymer in Toluol bei 23°C einen Gelanteil von größer 60 Gew.%, bezogen auf das Homo- bzw. Copolymer, bevorzugt von größer 80 Gew.-%, besonders bevorzugt von größer 90 Gew.-% aufweist.

Die erfindungsgemäßen Polychlorpren-Latices und gleichermaßen die aufkonzentrierten Polychloropren-Latices lassen sich exzellent für diverse Anwendungen einsetzen.

**Gegenstand der Erfindung** ist daher ferner die Verwendung der erfindungsgemäßen Polychloropren-Latices, gegebenenfalls in aufkonzentrierter Form, zur Herstellung von Dispersionsklebstoffen auf wässriger Basis, wobei die Polychloropren-Latices in gegebenenfalls aufkonzentrierter Form entweder als alleinige Latexkomponente oder in Abmischung mit anderen Latices eingesetzt werden.

Für diese Verwendung ist es von großem Vorteil, dass sich die Latices durch einen geringen Eigengeruch auszeichnen, bei gleichzeitig hoher Anfangsfestigkeit (dem sogenannten "Tack") und hoher Wärmestandfestigkeit.

Bei dieser Verwendung wird aus dem Polychloropren-Latex, gegebenenfalls in aufkonzentrierter Form, mit Wasser und optional weiteren Additiven eine wässrige Klebstoff-Dispersion hergestellt. Das Abbinden erfolgt beim Einsatz als Dispersionsklebstoff durch das Verdunsten des Wassers, wobei die Polymerteilchen zusammenfließen und einen geschlossenen Film bilden.

**Gegenstand der vorliegenden Erfindung** ist ferner die Verwendung der erfindungsgemäßen Polychloropren-Latices, gegebenenfalls in aufkonzentrierter Form, zur Herstellung von Formschaumartikeln, zur Bindung von Fasern aller Art, zur Imprägnierung von Geweben, zur Vergütung von Bitumen oder bitumenähnlichen Massen, zur Herstellung von Tauchartikeln, wobei jeweils die Polychloropren-Latices (ggf. in aufkonzentrierter Form) entweder als alleinige Latexkomponente oder in Abmischung mit anderen Latices eingesetzt werden.

Bei der Verwendung des Polychloropren-Latex (ggf. in aufkonzentrierter Form) zur Herstellung von Formschaumartikeln wird der Polychloropren-Latex einer Schäumung unterzogen.

Bei der Verwendung des Polychloropren-Latex (ggf. in aufkonzentrierter Form) zur Imprägnierung von Geweben wird der Polychloropren-Latex auf ein Gewebe aufgebracht.

Bei der Verwendung des Polychloropren-Latex (ggf. in aufkonzentrierter Form) zur Bindung von Fasern werden Fasern natürlichen Ursprungs oder synthetischer Natur mit dem Polychloropren-Latex behandelt.

Bei der Verwendung des Polychloropren-Latex (ggf. in aufkonzentrierter Form) zur Vergütung von Bitumen oder bitumenähnlichen Massen, werden Bitumen oder bitumenähnliche Massen mit dem Polychlorpren-Latex behandelt. Unter der Vergütung ist dabei die Elastifizierung oder Modifizierung des Bitumens oder der bitumenähnlichen Massen zu verstehen.

Bei der Verwendung des Polychloropren-Latex (ggf. in aufkonzentrierter Form) zur Herstellung von Tauchartikeln wird eine Tauchform in ein Beschichtungsbad eingebracht, welches den Polychloropren-Latex enthält, wobei sich ein Oberflächenfilm auf der Tau chform ausbildet, anschließend wird die Tauchform aus dem Beschichtungsbad entfernt und der Oberflächenfilm, der sich auf der Tauchform durch das Benetzen mit dem erfindungsgemäßen Latex ausgebildet hat, einer Vulkanisation unterworfen.

Auch für alle vorgenannten Anwendungen ist es von großem Vorteil, dass sich die Latices durch einen geringen Eigengeruch auszeichnen.

Sofern die erfindungsgemäßen Polychloropren-Latices (ggf. in aufkonzentrierter Form) in den vorgenannten Anwendungen in Abmischung mit anderen Latices eingesetzt werden, sind alle üblichen und bekannten anderen Latices als weitere Komponenten einsetzbar. Beispielsweise eignen sich SBR-, Acrylat- oder Polyvinylacetat-Latizes als weitere Komponenten.

Die Herstellung von Dispersionsklebstoffen auf Basis von Polychloropren-Latex ist beispielhaft beschrieben in "Handbook of Adhesives", Verlag van Nostrand Reinhold, Third Edition, New York 1990, S.301-305. Die Monographie von J.C.Carl (loc.cit.) stellt zusammenfassend die typischen Latexanwendungen wie Formschaumherstellung, Gewebeimprägnierung, Faserbindung, Tauchartikelherstellung und Bitumenvergütung dar.

### Gegenstand der Erfindung sind ferner

- die Dispersionklebstoffe basierend auf den erfindungsgemäßen Polychloropren-Latices,
- die Formschaumartikel basierend auf den erfindungsgemäßen Polychloropren-Latices,
- die mit den erfindungsgemäßen Polychloropren-Latices imprägnierten Gewebe,
- die mit den erfindungsgemäßen Polychloropren-Latices gebundenen Fasern,
- der mit den erfindungsgemäßen Polychloropren-Latices vergütete Bitumen oder bitumenähnlichen Massen, sowie
- die Tauchartikel basierend auf den erfindungsgemäßen Polychloropren-Latices.

### Beispiele:

### Beispiel 1 (Vergleich) und Beispiel 2 nichterfindungsgemäß

### a) Rezepturen für Beispiel 1 und 2

Die Herstellung der Emulsionspolymerisate erfolgte unter Einsatz der folgenden Grundrezeptur (Angabe in Gew.-Teilen pro 100 Gew.-Teile eingesetztes Chloropren):

| | **Beispiel 1 (Vergleich)** | **Beispiel 2** |
|---|---|---|
| Chloropren | 100 | 100 |
| Bestandteile der wässrigen Phase: | | |
| Entsalztes Wasser | 100 | 100 |
| Disproportionierte Harzsäure Na-Salz (Dehydro-,Dihydroabietinsäure Na-Salz) | 3,5 | 3,5 |
| Kondensationsprodukt aus Naphthalinsulfonsäure und Formaldehyd (Na-Salz) Natriumhydroxid | 1,0 | 1,0 |
| Aktivator (Formamidinsulfinsäure) | 0,36 | 0,38 |

### b) Durchführung der Emulsionspolymerisation

### Beispiel 1 (isotherme Fahrweise) (Vergleich) :

In einem 41-Reaktor wurden die wässrige Phase (1257g) und die Monomerphase (1200g) vorgelegt und mit Stickstoff gespült. Nach Aufheizen der Emulsion auf 44°C wurde die Polymerisation durch Zugabe einer geringen Menge (20 ml) an 2%iger wässriger Formamidinsulfinsäure gestartet und durch kontinuierliche weitere Zugabe der gleichen Lösung bis zu einem Umsatz von 95 % durchgeführt. Nach Erreichen des Umsatzes wurde die Polymerisation durch Zugabe von 0,1 Teilen Diethyl-hydroxylamin in Form einer wässrigen Lösung (10%) abgestoppt. Die nicht umgesetzten Monomeren wurden im Vakuum mit Hilfe von Dampf bis zu einem Restmonomergehalt von ca. 800 ppm entfernt. Die in Tabelle 1 angegebenen Umsätze wurden an Proben, die jeweils zu den in Tabelle 1 angegebenen Zeitpunkten aus dem Polymerisationsreaktor entnommen wurden, gravimetrisch ermittelt.

### Beispiel 2 nichterfindungsgemäß:

Die Polymerisation wurde wie in Beispiel 1 durchgeführt mit dem alleinigen Unterschied, dass die Starttemperatur der Polymerisation mit 40°C gewählt wurde und während der Polymerisation, wie unten in Tabelle 2 angegeben, sukzessive erhöht wurde. Die in Tabelle 2 angegebenen Umsätze wurden an Proben, die jeweils zu den in Tabelle 2 angegebenen Zeitpunkten aus dem Polymerisationsreaktor entnommen wurden, gravimetrisch ermittelt.

### c) Versuchsergebnisse

In den Tabellen 1 und 2 sind die Ergebnisse der Umsatzbestimmungen im Verlauf der Polymerisationen der Beispiele 1 und 2 aufgeführt sowie die jeweiligen Polymerisationstemperaturen.

**Tabelle 1:**

| Polymerisationszeit (h) | **Beispiel 1 (Vergleich)** | | **Beispiel 2** nichterfindungsgemäß | |
|---|---|---|---|---|
| | Monomerumsatz (%) | Polymerisationstemperatur (°C) | Monomerumsatz (%) | Polymerisationstemperatur (°C) |
| 0 | 0 | 44 | 0 | 40 |
| 1,0 | 40 | 44 | 30 | 40 |
| 1,5 | 65 | 44 | 55 | 42 |
| 2,0 | 73 | 44 | 75 | 44 |
| 3,0 | 82 | 44 | 85 | 46 |
| 3,25 | -- | -- | 95 | 48 |
| 4,0 | 89 | 44 | | |
| 5,5 | 95 | 44 | | |

Der Vergleich von Beispiel 2 und Vergleichsbeispiel 1 zeigt unmittelbar den Vorteil der Erfindung, dass eine deutliche Steigerung der Raum/Zeit-Ausbeute festzustellen ist.

### d) Gelgehalt

Für die Polymere der beiden Beispiele wurde der Gelgehalt als der in Toluol bei 23°C unlösliche Anteil des Polychloropren-Latex bestimmt. Zur Bestimmung wurden 250 mg des Polychloropren-Latex in 20 ml Toluol 24 Stunden unter Schütteln bei 23°C gequollen. Nach Zentrifugation mit 20.000 Upm wurde der unlösliche Anteil abgetrennt und getrocknet. Der Gelgehalt ergibt sich aus dem Quotienten des getrockneten Rückstands und der Einwaage und wird in Gewichtsprozent angegeben.

Das in Tabelle 2 aufgeführte Ergebnis zeigt, dass mit dem erfindungsgemäßen Verfahren vergleichbare Gelgehalte erreicht werden, woraus auf eine vergleichbare Polymerstruktur zu schlussfolgern ist.

**Tabelle 2:**

| **Beispiel** | **Gelgehalt in Toluol (Gew.%)** |
|---|---|
| 1 (Vergleich) | 85 |
| 2 nichterfindungsgemäß | 84 |

### e) Sensorische Prüfung

Von den in Beispiel 1 und 2 erhaltenen Latices wurden je 500 ml in eine 11-Weithalsflasche gegeben, verschlossen und für 24h bei Raumtemperatur gelagert. Nach Öffnen wurde die jeweilige Probe von drei Personen geruchssensorisch getestet. Dabei wurde das Geruchsempfinden anhand der folgenden Skala klassifiziert:
1 = sehr gut
2=gut
3 = neutral
4 = unangenehm
5 = sehr unangenehm

Die Prüfbeurteilung ergab die in Tabelle 3 zusammengefassten Benotungen durch die Testpersonen.

**Tabelle 3:**

| **Beispiel** | **Person A** | **Person B** | **Person C** |
|---|---|---|---|
| 1 (Vergleich) | 3 | 4 | 4 |
| 2 nichterfindungsgemäß | 2 | 2 | 3 |

Das Urteil der Testpersonen war somit für den erfindungsgemäßen Latex durchgehend positiver.

### f) Dimerengehalte

Die Latices aus Beispiel 1 und Beispiel 2 wurden einer gaschromatographischen Prüfung auf den Dimerengehalt (Dimere des Monomers Chloropren) unterzogen. Die in einer Nebenreaktion entstehenden Dimeren umfassen 6 strukturisomere Verbindungen, die zu einer Gruppe zusammengefasst werden. Der aus jeweils 5 gaschromatographischen Bestimmungen pro Beispiel ermittelte Mittelwert für den Dimerengehalt ist in Tabelle 4 angegeben:

**Tabelle 4:**

| **Beispiel** | **Dimerengehalt** |
|---|---|
| 1 (Vergleich) | 487 ppm |
| 2 nichterfindungsgemäß | 254 ppm |

Auch der deutlich verringerte Gehalt an Dimeren - als Leitsubstanz für eine ökologische Bewertung - zeigt den Vorteil der erfindungsgemäßen Polychloropren-Latices.

## Patentansprüche

1. Verfahren zur Herstellung eines Latex aus Homo- oder Copolymeren des Chloroprens und gegebenenfalls eines oder mehreren weiteren copolymerisierbaren ungesättigten Monomeren durch Emulsionspolymerisation, **dadurch gekennzeichnet, dass** man von einer Starttemperatur Tₛ ausgehend während der Emulsionspolymerisation die Polymerisationstemperatur anhebt, und zwar
a) bis zu einem Umsatz von 50 % um mindestens 3°C über die Starttemperatur T_{S} und anschließend
b) bis zu einem Umsatz von 90 % um mindestens 6°C über die Starttemperatur T_{S}.

2. Verfahren nach Anspruch 1, **dadurch gekennzeichnet, dass** die Starttemperatur T_{S} und die Polymerisationstemperatur in einem Bereich von 0°C bis 70°C, bevorzugt in einem Bereich von 10°C bis 60°C und besonders bevorzugt in einem Bereich von 35°C bis 50°C liegen.

3. Verfahren nach Anspruch 1 oder 2, **dadurch gekennzeichnet, dass** man von der Starttemperatur Tₛ ausgehend während der Emulsionspolymerisation die Polymerisationstemperatur anhebt, und zwar
a) bis zu einem Umsatz von 50% um mindestens 5 °C über die Starttemperatur T_{S} und anschließend
b) bis zu einem Umsatz von 90% um mindestens 6°C, bevorzugt um mindestens 8 °C über die Starttemperatur Tₛ.

4. Verfahren nach einem oder mehreren der Ansprüche 1-3, **dadurch gekennzeichnet, dass** die Anhebung der Polymerisationstemperatur stufenweise oder kontinuierlich erfolgt.

5. Verfahren nach einem oder mehreren der Ansprüche 1 bis 4, wobei neben Chloropren ein oder mehrere weitere copolymerisierbare ungesättigte Monomere eingesetzt werden, bei denen es sich um Monomere mit 3 bis 12 C-Atomen und 1 oder 2 copolymerisierbaren C=C-Doppelbindungen pro Molekül handelt, bevorzugt um 2,3-Dichlorbutadien und 1-Chlorbutadien.

6. Verfahren nach einem oder mehreren der Ansprüche 1 bis 5, wobei das Verfahren entweder diskontinuierlich oder kontinuierlich durchgeführt wird.

7. Latex eines Homo- oder Copolymeren von Chloropren und gegebenenfalls einem oder mehreren weiteren copolymerisierbaren ungesättigten Monomeren, erhältlich durch das Verfahren gemäß einem oder mehreren der Ansprüche 1 bis 6, wobei das Homo- bzw. Copolymer in Toluol bei 23 °C einen Gelanteil von größer 60 Gew.%, bezogen auf das Homo- bzw. Copolymer, bevorzugt von größer 80 Gew.-%, besonders bevorzugt von größer 90 Gew.-% aufweist.

8. Latex eines Homo- oder Copolymeren gemäß Anspruch 7, **dadurch gekennzeichnet, dass** er eine deutlich geringere Bildung von Nebenprodukten, , insbesondere der Dimeren des Chloroprens, als dies bei Verfahren, wenn die Polymerisation bei einer konstanten Reaktionstemperatur durchgeführt wird, aufweist.

9. Aufkonzentrierter Latex eines Homo- oder Copolymeren gemäß Anspruch 7, oder 8.

10. Verwendung des Polychloropren-Latex gemäß Anspruch 7, 8 oder 9 zur Herstellung von Dispersionsklebstoffen auf wässriger Basis, wobei der Polychloropren-Latex gemäß Anspruch 7, 8 oder 9 entweder als alleinige Latexkomponente oder in Abmischung mit anderen Latices eingesetzt wird.

11. Verwendung des Polychloropren-Latex gemäß Anspruch 7, 8, oder 9 zur Herstellung von Formschaumartikeln, zur Bindung von Fasern, zur Imprägnierung von Geweben, zur Vergütung von Bitumen oder bitumenähnlichen Massen, zur Herstellung von Tauchartikeln, wobei der Polychloropren-Latex gemäß Anspruch 7, 8, oder 9 jeweils entweder als alleinige Latexkomponente oder in Abmischung mit anderen Latices eingesetzt wird.

12. Dispersionsklebstoff basierend auf einem Polychloropren-Latex gemäß Anspruch 7, 8, oder 9.

13. Formschaumartikel basierend auf einem Polychloropren-Latex gemäß Anspruch 7, 8, oder 9.

14. Gewebe, die mit einem Polychloropren-Latex gemäß Anspruch 7, 8, oder 9 imprägniert sind.

15. Fasern, die mit Polychloropren-Latices gemäß Anspruch 8 oder 9 gebunden sind.

16. Bitumen oder bitumenähnlichen Massen, die mit einem Polychloropren-Latex gemäß Anspruch 7, 8, oder 9 vergütet sind.

17. Tauchartikel basierend auf einem Polychloropren-Latex gemäß Anspruch 7, 8, oder 9.

## Claims

1. Process for producing a latex of homo- or copolymers of chloroprene and optionally one or more further copolymerizable unsaturated monomers by emulsion polymerization, **characterized in that**, proceeding from a starting temperature T_{S}, the polymerization temperature is raised during the emulsion polymerization
a) by at least 3°C above the starting temperature T_{S} up to a conversion of 50% and subsequently
b) by at least 6°C above the starting temperature T_{S} up to a conversion of 90%.

2. Process according to Claim 1, **characterized in that** the starting temperature T_{S} and the polymerization temperature range from 0°C to 70°C, preferably from 10°C to 60°C and more preferably from 35°C to 50°C.

3. Process according to Claim 1 or 2, **characterized in that**, proceeding from a starting temperature T_{S}, the polymerization temperature is raised during the emulsion polymerization
a) by at least 5°C above the starting temperature T_{S} up to a conversion of 50% and subsequently
b) by at least 6°C, preferably by at least 8°C, above the starting temperature T_{S} up to a conversion of 90%.

4. Process according to one or more of Claims 1-3, **characterized in that** the polymerization temperature is raised in stages or continuously.

5. Process according to one or more of Claims 1 to 4, wherein, as well as chloroprene, one or more further copolymerizable unsaturated monomers are used which are monomers having 3 to 12 carbon atoms and 1 or 2 copolymerizable C=C double bonds per molecule, preferably 2,3-dichlorobutadiene and 1-chlorobutadiene.

6. Process according to one or more of Claims 1 to 5, wherein the process is carried out either batchwise or continuously.

7. Latex of a homo- or copolymer of chloroprene and optionally one or more further copolymerizable unsaturated monomers, obtainable by the process according to one or more of Claims 1 to 6, the homo- or copolymer having a gel content in toluene at 23°C of greater than 60% by weight, based on the homo- or copolymer, preferably of greater than 80% by weight and more preferably of greater than 90% by weight.

8. Latex of a homo- or copolymer according to Claim 7, **characterized in that** it comprises a distinctly lower formulation of by-products, in particular chloroprene dimers, than is the case in processes where the polymerization is carried out at a constant reaction temperature.

9. Concentrated latex of a homo- or copolymer according to Claim 7 or 8.

10. Use of the polychloroprene latex according to Claim 7, 8 or 9 for producing waterborne disperse adhesives, the polychloroprene latex according to Claim 7, 8 or 9 being used either as sole latex component or in admixture with other latices.

11. Use of the polychloroprene latex according to Claim 7, 8 or 9 for producing moulded foam articles, for bonding fibres, for impregnating fabrics, for enhancing bitumen or bituminous materials, for producing dipped goods, the polychloroprene latex according to Claim 7, 8 or 9 being used either as sole latex component or in admixture with other latices.

12. Disperse adhesive based on a polychloroprene latex according to Claim 7, 8 or 9.

13. Moulded foam article based on a polychloroprene latex according to Claim 7, 8 or 9.

14. Fabrics impregnated with a polychloroprene latex according to Claim 7, 8 or 9.

15. Fibres bonded with polychloroprene latices according to Claim 8 or 9.

16. Bitumen or bituminous materials enhanced with a polychloroprene latex according to Claim 7, 8 or 9.

17. Dipped goods based on a polychloroprene latex according to Claim 7, 8 or 9.

## Revendications

1. Procédé pour la production d'un latex d'homopolyméres ou copolymères du chloroprène et éventuellement d'un ou de plusieurs autres monomères insaturés copolymérisables, par polymérisation en émulsion, **caractérisé en ce que** pendant la polymérisation en émulsion, à partir d'une température initiale Tₛ, on élève la température de polymérisation, à savoir
a) jusqu'à un taux de conversion de 50 %, d'au moins 3 °C au-dessus de la température initiale Tₛ et ensuite
b) jusqu'à un taux de conversion de 90 %, d'au moins 6 °C au-dessus de la température initiale Tₛ.

2. Procédé selon la revendication 1, **caractérisé en ce que** la température initiale Tₛ et la température de polymérisation se situent dans une plage de 0 °C à 70 °C, de préférence dans une plage de 10 °C à 60 °C et de façon particulièrement préférée dans une plage de 35 °C à 50 °C.

3. Procédé selon la revendication 1 ou 2, **caractérisé en ce que** pendant la polymérisation en émulsion, à partir de la température initiale Tₛ, on élève la température de polymérisation, à savoir
a) jusqu'à un taux de conversion de 50 %, d'au moins 5 °C au-dessus de la température initiale Tₛ et ensuite
b) jusqu'à un taux de conversion de 90 %, d'au moins 6 °C, de préférence d'au moins 8°C au-dessus de la température initiale Tₛ.

4. Procédé selon une ou plusieurs des revendications 1 à 3, **caractérisé en ce que** l'élévation de la température de polymérisation s'effectue graduellement ou en continu.

5. Procédé selon une ou plusieurs des revendications 1 à 4, dans lequel outre le chloroprène on utilise un ou plusieurs autres monomères insaturés copolymérisables, qui consistent en des monomères ayant de 3 à 12 atomes de carbone et comportant 1 ou 2 doubles liaisons C=C copolymérisables par molécule, de préférence en 2,3-dichlorobutadiène et 1-chloro-butadiène.

6. Procédé selon une ou plusieurs des revendications 1 à 5, le procédé étant effectué soit en mode discontinu, soit en continu.

7. Latex d'un homopolymère ou copolymère de chloroprène et éventuellement d'un ou de plusieurs autres monomères insaturés copolymérisables, pouvant être obtenu par le procédé selon une ou plusieurs des revendications 1 à 6, l'homopolymère ou le copolymère présentant dans le toluène à 23 °C une proportion de gel de plus de 60 % en poids, par rapport à l'homopolymère ou au copolymère, de préférence de plus de 80 % en poids, de façon particulièrement préférée de plus de 90 % en poids.

8. Latex d'un homopolymère ou copolymère selon la revendication 7, **caractérisé en ce qu'**il comporte une nettement moindre formation de produits secondaires, en particulier des dimères du chloroprène, que dans des procédés où la polymérisation est effectuée à une température de réaction constante.

9. Latex concentré d'un homopolymère ou copolymère selon la revendication 7 ou 8.

10. Utilisation du latex-polychloroprène selon la revendication 7, 8 ou 9, pour la production d'adhésifs en dispersion à base aqueuse, le latex-polychloroprène selon la revendication 7, 8 ou 9 étant utilisé soit comme unique composant latex, soit en mélange avec d'autres latex.

11. Utilisation du latex-polychloroprène selon la revendication 7, 8 ou 9, pour la fabrication d'articles en mousse moulés, pour le liage de fibres, pour l'imprégnation de tissus, pour le traitement de bitumes ou de matières bitumineuses, pour la fabrication d'articles à immerger, le latex-polychloroprène selon la revendication 7, 8 ou 9 étant dans chaque cas utilisé soit comme unique composant latex, soit en mélange avec d'autres latex.

12. Adhésif en dispersion, à base d'un latex-polychloroprène selon la revendication 7, 8 ou 9.

13. Article en mousse moulé, à base d'un latex-polychloroprène selon la revendication 7, 8 ou 9.

14. Tissus, qui sont imprégnés avec un latex-polychloroprène selon la revendication 7, 8 ou 9.

15. Fibres, qui sont liées avec des latex-polychloroprène selon la revendication 8 ou 9.

16. Bitumes ou matières bitumineuses, qui sont traités par un latex-polychloroprène selon la revendication 7, 8 ou 9.

17. Article à immerger à base d'un latex-polychloroprène selon la revendication 7, 8 ou 9.
